Europäisches Patentamt

European Patent Office

Office européen des brevets

(11) Publication number: **0 083 146**
**B1**

(12) EUROPEAN PATENT SPECIFICATION

(45) Date of publication of patent specification: **13.05.87**

(21) Application number: **82304373.2**

(22) Date of filing: **19.08.82**

(51) Int. Cl.⁴: **B 62 D 49/08,** B 62 D 49/02,
A 01 B 59/06, E 02 F 3/43

(54) **Vehicle with detachable ballast weight.**

(30) Priority: **29.12.81 EP 81110815**

(43) Date of publication of application:
**06.07.83 Bulletin 83/27**

(45) Publication of the grant of the patent:
**13.05.87 Bulletin 87/20**

(84) Designated Contracting States:
**AT DE FR GB IT SE**

(56) References cited:
**DE-A-2 225 891**
**DE-A-2 228 049**
**FR-A-2 272 949**
**US-A-2 891 681**

(73) Proprietor: **DEERE & COMPANY**
**1 John Deere Road**
**Moline Illinois 61265 (US)**

(72) Inventor: **Stuhrmann, Heinz**
**Marstallstrasse 32**
**D-6830 Schwetzingen (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a vehicle with detachable ballast weight and at least one lift cylinder for substantially vertical raising and lowering the weight.

It is well known to attach ballast weights to the front or rear of agricultural and earth-working vehicles and the weights are commonly detachable. Nevertheless attachment and removal are in many cases major operations. This is acceptable when the working conditions of a vehicle are well defined and subject to little variation. As against this there are some vehicles, e.g., agricultural tractors, which perform widely varying duties and which need ballast weight only part of the time.

A vehicle (tractor) of the kind first mentioned above is known from DE—A—2059208 which describes a partial solution to the foregoing problem. According to this solution a special frame is mounted on a three point hitch. This frame can be raised beneath an attachment structure on the weight to engage and raise the weight. This makes it easy to handle the weight but introduces another disadvantage in that the hitch is unusable whenever the ballast weight is employed. Moreover, the weight projects undesirably in front of or behind the tractor.

A similar solution is known also from FR—A—2 272 949 in which a cylinder swings up and down two forwardly projecting, rearwardly pivoted arms which have hooks at their front ends for hooking under lugs on the weight, which is thus readily detachable. The arms cannot be used for any other purpose when the vehicle is carrying the weight.

The object of the present invention is to provide a vehicle, especially a tractor, with a compactly mounted, detachable ballast weight which can be raised and lowered non-manually by means which can be used independently as raising and lowering means when the weight is attached.

The invention is characterised in that the or each lift cylinder is fixed at one end while the other end is detachably coupled to the weight, by guide means for guiding the weight substantially vertically, and by locking means engageable between the weight and the guide means in at least one vertical position of the weight to fix the weight in position and allow detachment of the cylinder(s) for operation of an implement thereby. The guide means are preferably two vertical guides, one on each side of the weight and the or each cylinder is preferably vertical, the weight being suspended from the cylinder(s). There are preferably two lift cylinders one at each side of the weight. In addition it is possible additionally to achieve efficient damping, by means of the weight, of the oscillations of a coupled system of towing vehicle and towed implement, by the provision of a control valve arrangement for the lift cylinder(s) having a first position for raising the weight, a second position for lowering the weight, and a third position in which the cylinder(s) are connected as a hydraulic damping system.

This makes it possible to achieve maximum flexibility of operation: raising or lowering the weight and connection of an implement to the cylinders; running with the weight detached and connection of an implement to the cylinders and running with the weight acting as a damping means.

In order to connect an implement it is preferred to mount lower links, with the weight either removed or fixed in position by the locking means. The cylinders are then uncoupled from the weight and coupled to the links so as to actuate these for raising and lowering an implement.

The use of vertical guides and lift cylinders enables the whole structure, including the suspended weight, to be housed inside the cowling of the vehicle.

Other advantageous features are set forth in the claims and their advantages will be apparent from the following description of a preferred embodiment.

The invention will now be described in more detail, by way of example, with reference to the accompanying drawings, in which:—

Fig. 1 is a perspective front view of the lifting apparatus with a ballast weight, installed at the front of the tractor,

Fig. 2 is a front view of the lifting apparatus,

Fig. 3 is a plan view of the lifting apparatus,

Fig. 4 is a side view of the lifting apparatus,

Fig. 5 is a hydraulic circuit diagram, and

Fig. 6 is a perspective front view showing how the apparatus is adapted for lifting implements.

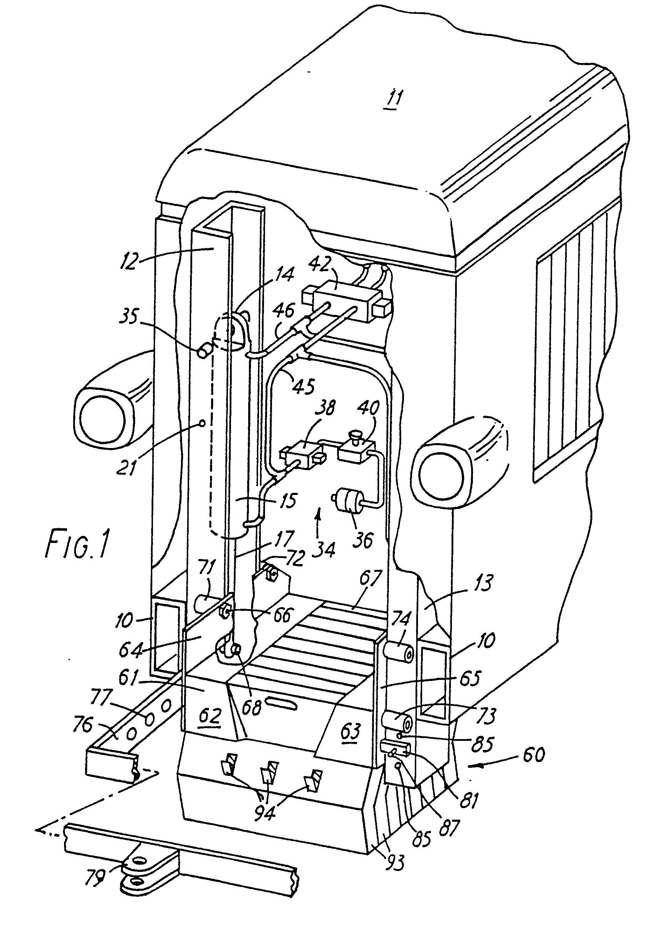

In Fig. 1 the front cowling 11 of the tractor is broken away to show the lifting apparatus supporting a ballast weight 60. The lifting apparatus comprises a guide frame which is arranged substantially vertically and which comprises two parallel channel-section uprights 12 and 13. The open faces of the uprights face each other. The uprights 12, 13 are fixed, preferably by welding, to the side frame members 10 of the tractor chassis.

The lifting means used in this arrangement are right-hand and left-hand lifting cylinders 15 and 16, with piston rods 17 and 18 which each have a respective eye 19 and 20 at the end thereof, for mounting the coupling member 68 and 69 respectively of the weight 60 which is to be connected to the apparatus. At the other end, each lifting cylinder 15 and 16 is connected to the respective upright 12 and 13 by way of a lug 14 and a pin or bolt 35 inserted through holes 21 in the flanges of the upright 12, 13 and an eye in the lug 14. In the illustrated embodiment, each coupling member 68, 69 is a pin which is fixed to the ballast weight and is passed through the respective eye 19 or 20. The lifting cylinders 15 and 16 are connected to a hydraulic cylinder 34 which provides both for controlled stepless vertical movement and also oscillation damping in respect of the vertical oscillating movement of the weights under the influence of pitching of the vehicle.

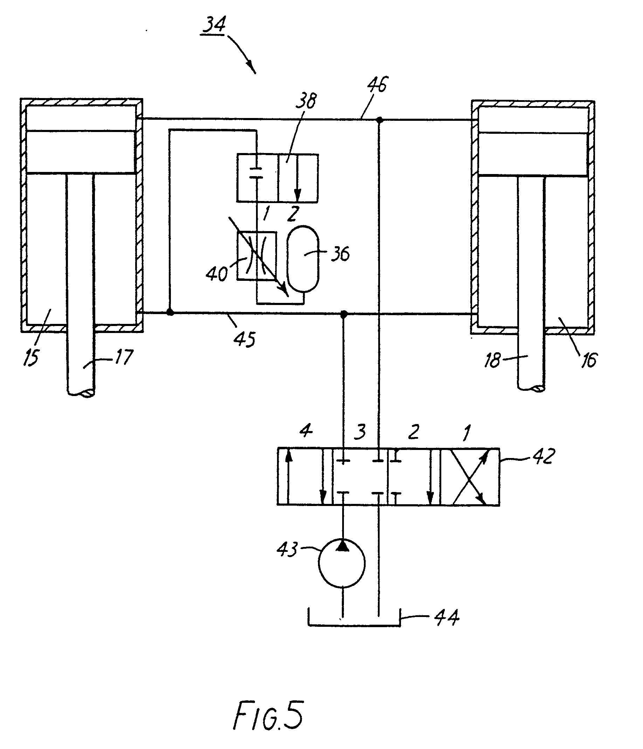

The hydraulic system 34 (Fig. 5) comprises a pressure accumulator 36, a 2/2 way valve 38, an adjustable throttle 40, a 4/4 way valve 42, a pump 43 and a sump 44. The cylinders 15 and 16 are double acting and connected in parallel to "raise" and "lower" lines 45 and 46. Position 3 (the illustrated position) of the valve 42 isolates both lines 45 and 45 and enables the lifting apparatus to be locked in a fixed position the valve 38 remaining closed. Positions 4 and 1 of the 4/4 way valve 42 are selected for raising and lowering the piston rods 17 and 18, with the 2/2 way valve 38 closed. In position 2 of the valve 42, the hydraulic circuit is switched to the vibration damping mode, the 2/2 way valve 38 being moved from position 1 to position 2 (open) simultaneously with actuation of the 4/4 way valve 42 to position 2. The "lower" line 46 is vented to the sump while the "raise" line 45 is connected to the accumulator 36 through the adjustable throttle valve 40. The weights which are pivotally connected to the piston rods 17 and 18 are then used as damping weights. The system acts as a damping means by virtue of the "spring" effect of the accumulator 36 and the "friction" of the throttle valve 40.

The throttle valve 40 permits adjustable damping of the weights, providing for optimum effect of the system, in particular adjustment of proper damping for various load conditions and terrains. The use of the hydraulic circuit both for producing the lifting movement and also for providing the damping weight system is achieved by the control circuit described.

The valves 38 and 42 can be operated in various ways but preferably with automatic control of the valve 38 (e.g. by an electromagnet) so that it is in its position 1 for positions 1, 3, 4 of the valve 42 and in its position 2 for position 2 of the valve 42. The valve 42 is preferably a manual valve in the tractor can or on the side of the vehicle, enabling the weight or implement being lifted to be observed while operating the valve.

The ballast weight 60 comprises a support frame 61 which comprises two side members 62 and 63 which are disposed parallel to each other and which are connected by an end plate 67. At their respective outward longitudinal sides, the side members 62 and 63 having upstanding side plates 64 and 65 respectively. The space between the frame members 62 and 63 forms a downwardly tapering trapezium, i.e. a dovetail slot. All components of the support frame 61 may be welded together.

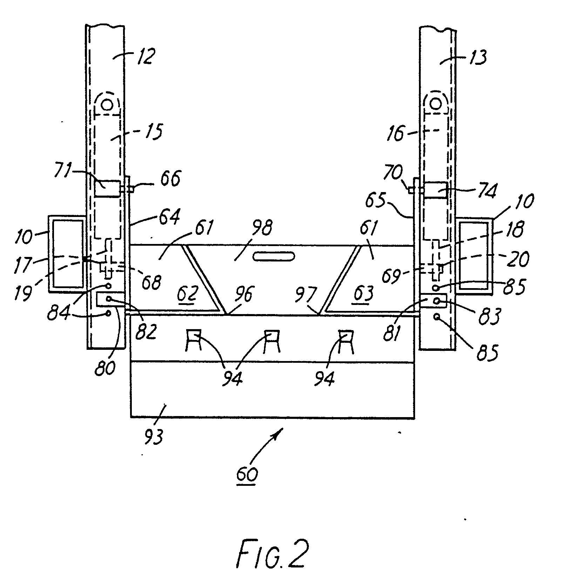

Secured to the side plates 64 and 65 of the support frame 61 are the outwardly pointing pins 68 and 69 and pairs of guide rollers 71 to 75 which are journalled on pins 66 and 70 which are fixed in bores in the sideplates 64 and 65. In comparison, Figs. 2 to 4 show an embodiment wherein there are only two guide rollers secured to each of the sideplates 64 and 65. Each pair of guide rollers (e.g. rollers 71 and 72 in Fig. 1) straddles the corresponding upright 12 or 13 and guides the weight 60 for vertical movement. Likewise, it is also possible to use guide rail members instead of guide rollers. The guide rollers 71 to 75 bear against the flanges of the uprights 12 and 13 of the guide frame, and slide along the uprights 12 and 13 when the ballast weight is moved or slid vertically.

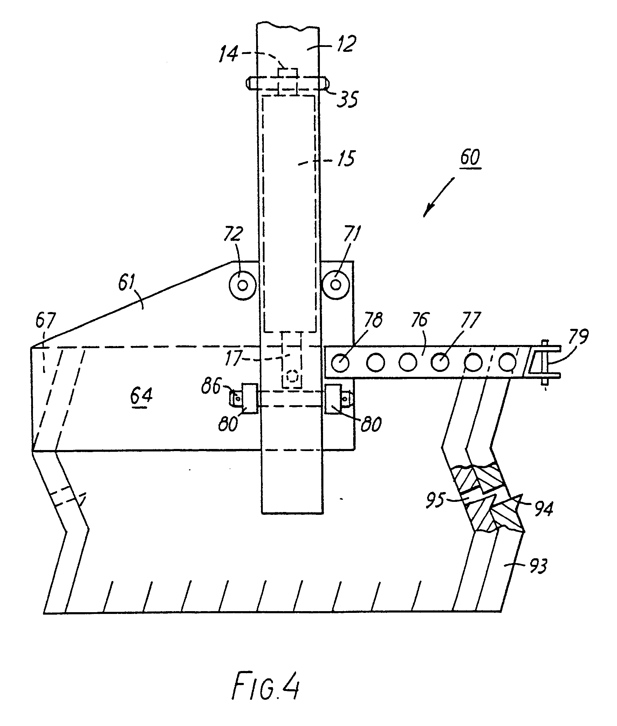

In addition front and rear stub bars 80 are secured to the sideplate 64 and front and rear stub bars 81 are secured to the sideplate 65 of the support frame 61, for rigidly connecting the balast weight 60 to the guide frame formed by the uprights 12 and 13. The bars 80 and 81 have bores 82 and 83 and the flanges of the uprights 12 and 13 have a plurality of bores 84 and 85 disposed one above the other. When the weight 60 is adjusted to a height at which the bores 82, 83 register with two pairs of bores 84, 85 it is possible to insert pins 86, 87 so that the ballast weight is rigidly connected to the guide frame, as may best be seen in Figs. 1 and 4.

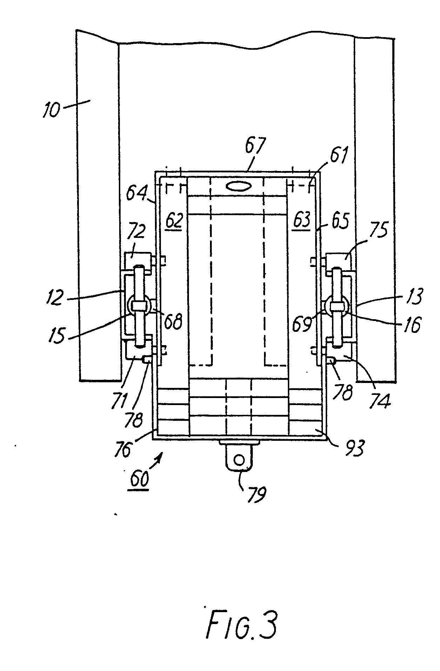

Additional weights 93 can be inserted into the support frame 61 of the ballast weight 60. Each additional weight 93 is of a flattened Z-shaped cross-section in side view and has two V-shaped recesses 96 and 97 which form the top part of the weight into a dovetail tongue 98 (Fig. 2) which can be slid into the aforementioned dovetail slot in the frame 61. Accordingly each additional weight 93 is positively fixed with respect to the support frame 61. The additional weights rest in each other by virtue of their cross-section (see Fig. 4) thereby approximating to a unitary mass. Additional interengagement is provided by front projections 94 which engage in rear recesses 95. A towing clevis 79 can be mounted on the front of a yoke 76. The yoke 76 completes the fourth side of the support frame 61 of the weight and performs several functions. The yoke has side arms with bores 76 and the yoke is pinned to the side plates 64 and 65 of the support frame 61 by means of pins or bolts 78. The holes 77 can be selected in accordance with the number of weights so that the front bar of the yoke is close against the front weight 93. The weights are thereby locked in place, especially extra front weights (see Fig. 3) which are supported solely by the projection 94 and recesses 95. In addition the front bar of the yoke 76 carries the clevis 79 and ensures that this always has a mounting of adequate strength for the draught loads which it has to handle.

When operating in the field with an implement attached to the rear three-point hitch, it is usual in regard to agricultural tractors for the load on the front axle to be increased by means of additional weights, in order thereby to increase the total traction force and improve the steering of the tractor. When using the described hydraulic lifting apparatus with the ballast weight illustrated, this increase in front axle load can be readily achieved by lifting the weight 60, the support frame 61 being coupled to the lifting cylinders 15 and 16, and the pins 86 and 87 being passed through the bars 80 and 81 at the desired height, into the bores 84 and 85 in the flanges of the uprights 12 and 13. Before the weight 60 is lifted, the support frame is fitted with the number of additional weights required to achieve the desired ballast effect. This ballast action, which is easy to provide, facilitates working in the field.

For transporting the entire system comprising a tractor and an implement, bumpy roads give rise to additional dynamic wheel loadings which result in the front axle of the tractor being loaded and relieved of load, which also has a detrimental effect on the steering of the tractor. The additional weights can be used in this situation to act as a damping weight, thereby permitting substantial improvements to be achieved. To this end the rigid connection between the support frame 61 and the upright 12 and 13 is released by pulling the pins 86 and 87 out of the bars 80 and 81. The support frame 61 is still connected to the ends of the piston rods 17 and 18 of the lifting cylinders 15 and 16 by means of the pins 68 and 69. If the 4/4-way valve 42 of the hydraulic system 34 is now moved into position 2 and the 2/2 way valve 38 is moved into position 2, the hydraulic system 34 is switched to the damping mode and the ballast weight 60 which is coupled to the cylinders 15 and 16 is utilised as a damping weight. The oscillating movement of the ballast weight on the vehicle in a vertical direction under the influence of pitching of the vehicle during transportation thereof is thus damped.

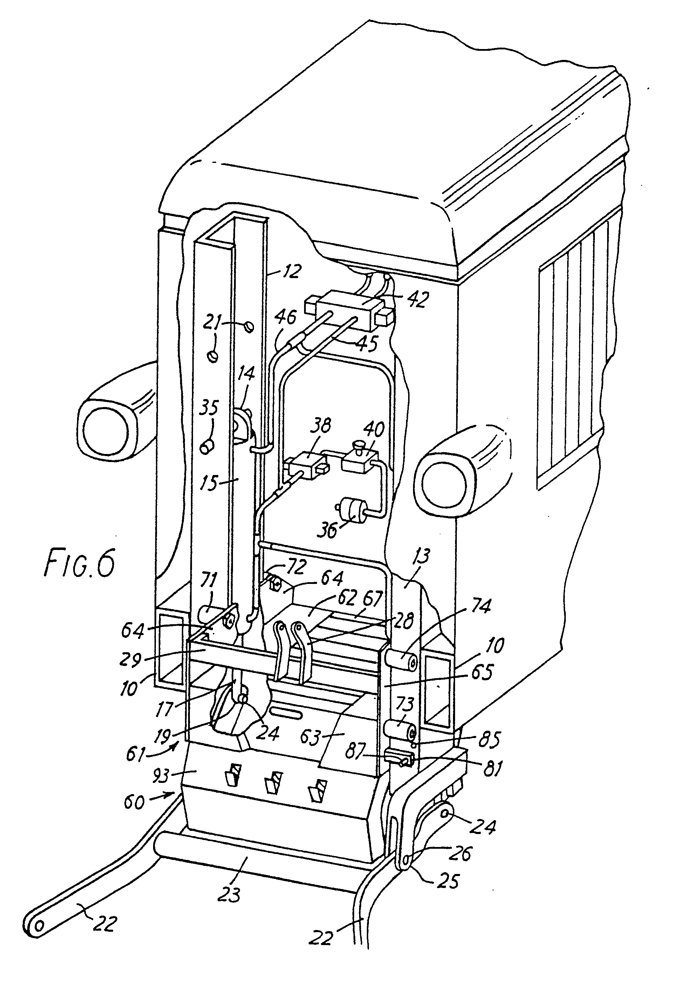

Fig. 6 shows how the arrangement can be converted to act as implement lift, e.g. for a front-end mounted implement. The weight 60 is fixed to the frame uprights 12 and 13 as described above and the coupling pins 68, 69 have been removed to uncouple the cylinders 15, 16 from the weights. The cylinders now act as lift cylinders for two lower links 22 connected by a cross bar 23. The rear ends of the links 22 are connected to the piston rod eyes 19, 20 by pivot pins 24. The links are pivotally mounted, somewhat forward of their rear ends, in forked brackets 25 fixed to the outer faces of the uprights 12, 13. Pivot pins 26 pass through the forked brackets and the links. The brackets 25 may be permanently attached and the links 22 be attached and removed by means of the pins 24 and 26. Alternatively the brackets may also be removable, being fixed by bolts (not shown).

When the valve 42 is set to position 1 to lower the piston rods 17, 18 it is apparent that an implement mounted at the front of the lower links 22 will be raised. In position 4 which raises the piston rods the implement will be lowered.

To complete the mounting of the implement an upper link (not shown) may be pivoted to a clevis 28 on a cross-bar 29 spanning the side-plates 64, 65, of the weight support frame 61. The bar 29 may be detachable or a permanent, welded part of the frame 61.

It will typically be found desirable to move the cylinders 15, 16 to a lower position for attachment to the links 22, as can be seen by comparing Figs. 1 and 6. This is readily achieved by providing upper and lower sets of the holes 21 in the upright 12, 13 for the pins 35 which are used to anchor the closed ends of the cylinders. More than two sets of holes 21 can be provided to give a range of cylinder positions.

Although the preferred cylinder arrangement is as shown with the closed end at the top fixed to the rame uprights 12, 13 it is possible to invert the cylinders and fix the rod ends and attach the closed ends by way of the eyes 14 to the weight 60 or links 22. For either way up of the cylinders 15, 16 it is also possible to anchor the lower ends and connect the top ends to the weight or links via direction-reversing cables or chains passing over pulleys or sprockets at the top of the uprights 12, 13.

Although the arrangement has been described mounted on the front of a tractor it is not restricted to such a position. It may be used alternatively or additionally at the rear or even on the side of a vehicle, especially with a rotating cab platform.

## Claims

1. A vehicle, especially a tractor, with a detachable ballast weight (60) and at least one lift cylinder (15, 16) for substantially vertically raising and lowering the weight, characterised in that the or each lift cylinder (15, 16) is fixed at one end (14) while the other end (19, 20) is detachably coupled to the weight (60), by guide means (12, 13) for guiding the weight substantially vertically, and by locking means (81—87) engageable between the weight (60) and the guide means (12, 13) in at least one vertical position of the weight to fix the weight in position and allow detachment of the cylinder(s) (15, 16) for operation of an implement thereby.

2. A vehicle according to claim 1, characterised in that the guide means comprise two vertical guides (12, 13) one on each side of the weight (60), and in that the or each cylinder (15, 16) is vertical, the weight being suspended from the cylinder(s).

3. A vehicle according to claim 1 or 2, characterised in that the weight (60), the guide means (12, 13) and lift cylinder(s) (15, 16) are within the cowling of the vehicle.

4. A vehicle according to claim 1, characterised in that the guide means comprise two uprights (12, 13) between which the weight (60) is guided, and in that the locking means comprise pins (86, 87) for pinning the weight to the uprights.

5. A vehicle according to claim 4, characterised in that each upright has a plurality of vertically spaced holes (84, 85) for pinning the weight (60) at different heights.

6. A vehicle according to claim 4 or 5, characterised in that there are two lift cylinders (15, 16) each attached at one end to the corresponding upright and releasably attached at the other end to the weight (60).

7. A vehicle according to claim 6, characterised in that each cylinder (15, 16) has a closed upper end (14) attached to its upright (12, 13) and a lower rod end (19, 20) pivotally attached to the weight (60).

8. A vehicle according to claim 7, characterised in that the closed upper end (14) is attachable to its upright at a plurality of different height positions.

9. A vehicle according to claims 6, 7 or 8, characterised in that the uprights (12, 13) are channel section members within which the cylinders are disposed.

10. A vehicle according to any of claims 1 to 9, characterised by means (25) for pivotally supporting lower links (22) and means (24) for connecting the lower links (22), instead of the weight to the cylinder(s) (15, 16).

11. A vehicle according to claims 4 and 10, characterised in that the supporting means comprises brackets (25) attached to the bottoms of the uprights (12, 13).

12. A vehicle according to claim 10 or 11, characterised in that the weight (60) comprises a frame (61) including a member (28, 29) providing a pivot point for an upper link.

13. A vehicle according to any of claims 1 to 12, characterised in that the weight (60) comprises a support frame (61) carrying detachable weights (93), a retaining member (76) attachable to the frame to prevent weights coming off, and a hitch member (79) fixed to the retaining member.

14. A vehicle according to any of claims 1 to 13, further characterised by a control valve arrangement (38, 42) for the lift cylinder(s) having a first position for raising the weight, a second position for lowering the weight, and a third position in which the cylinder(s) are connected as a hydraulic damping system.

15. A vehicle according to claim 14, characterised in that the valve arrangement (38, 42) connects the cylinder(s) (15, 16), in the third position, through a throttle device (40) to a pressure accumulator (36).

16. A vehicle according to claim 15, characterised in that the throttle device (40) is adjustable.

17. A vehicle according to claim 15 or 16, characterised in that the cylinder(s) (15, 16) are double acting and are connected to "raise" and "lower" lines (45, 46) the valve arrangement (38, 42) in the third position, connecting the "raise" line (45) to the throttle device (40) and accumulator (36) and connecting the "lower" line (46) to the sump (44).

18. A vehicle according to claim 17, characterised in that the valve arrangement (38, 42) has a fourth position in which the "raise" and "lower" lines (45, 46) are both isolated so as to lock the weight (60) or implement hydraulically.

**Patentansprüche**

1. Fahrzeug, insb. Zugmaschine, mit einem lösbaren Ballast-Gewicht (60) und wenigstens einem Hubzylinder (15, 16), um das Gewicht im wesentliche zu heben und zu senken, dadurch gekennzeichnet, daß der oder jeder Hubzylinder (15, 16) mit dem einen Ende (14) fest und mit dem anderen Ende (19, 20) lösbar mit dem Gewicht verbunden ist, und zwar durch Führungsmittel (12, 13) zum im wesentlichen vertikalen Führen des Gewichtes und durch Sperrmittel (81, 87), die zwischen dem Gewicht (60) und dem Führungsmittel (12, 13) wenigstens in einer vertikalen Stellung des Gewichtes einrückbar sind, um das Gewicht in der Stellung festzulegen und ein Lösen des oder der Zylinder (15, 16) und dessen Benutzung zur Betätigung eines Gerätes zu erlauben.

2. Fahrzeug nach Anspruch 1, dadurch gekennzeichnet, daß die Führungsmittel zwei vertikale Führungen (12, 13) aufweisen, und zwar jeweils eine auf jeder Seite des Gewichtes (60), und daß der oder jeder Zylinder (15, 16) vertikal angeordnet ist, wobei das Gewicht von dem oder den Zylindern herabhängt.

3. Fahrzeug nach Anspruch 1 oder 2, dadurch gekennzeichnet, daß das Gewicht (60), die Führungsmittel (12, 13) und der oder die Hubzylinder (15, 16) innerhalb der Verkleidung des Fahrzeugs angeordnet sind.

4. Fahrzeug nach Anspruch 1, dadurch gekennzeichnet, daß die Führungsmittel (2) aufrechte Ständer (12, 13) aufweisen, zwischen denen das Gewicht (60) geführt ist, und daß die Sperrmittel Stifte (86, 87) aufweisen, um das Gewicht an den aufrechten Ständern festzulegen.

5. Fahrzeug nach Anspruch 4, dadurch gekennzeichnet, daß jeder aufrechte Ständer eine Mehrzahl von vertikal im Abstand angeordneten Löchern (84, 85) zum Festlegen des Gewichtes (60) in verschiedenen Höhenlagen aufweist.

6. Fahrzeug nach Anspruch 4 oder 5, dadurch gekennzeichnet, daß zwei Hubzylinder (15, 16) vorgesehen sind, von denen ein jeder mit seinem einen Ende an dem korrespondierenden Ständer und lösbar mit seinem anderen Ende an dem Gewicht (60) angebracht ist.

7. Fahrzeug nach Anspruch 6, dadurch gekennzeichnet, daß jeder Zylinder (15, 16) ein geschlossenes oberes Ende (14) aufweist, das an dem zugehörigen aufrechten Ständer (12, 13) angebracht ist sowie ein unteres Stangenende (19, 20) aufweist, das mit dem Gewicht (60) gelenkig verbunden ist.

8. Fahrzeug nach Anspruch 7, dadurch gekennzeichnet, daß das geschlossene Ende (14) an dem zugehörigen aufrechten Ständer an einer Mehrzahl von unterschiedlichen Höhenstellungen anbringbar ist.

9. Fahrzeug nach Anspruch 6, 7 oder 8, dadurch gekennzeichnet, daß die aufrechten Ständer (12, 13) Glieder mit kanalförmigem Querschnitt sind, in denen die Zylinder angeordnet sind.

10. Fahrzeug nach irgendeinem der Ansprüche 1 bis 9, gekennzeichnet durch Mittel (25), um die unteren Glieder (22) schwenkbar zu unterstützen und durch Mittel (24), um die unteren Glieder (22) statt mit dem Gewicht mit dem oder jedem Zylinder (15, 16) zu verbinden.

11. Fahrzeug nach den Ansprüche 4 und 10, dadurch gekennzeichnet, daß die Stützmittel Halter (25) umfassen, die an den unteren Enden der aufrechten Ständer (12, 13) befestigt sind.

12. Fahrzeug nach Anspruch 10 oder 11, dadurch gekennzeichnet, daß das Gewicht (60) einen Rahmen (61) aufweist, welches ein Glied (28, 29) umfaßt, welches einen Schwenkpunkt für ein oberes Verbindungsglied bildet.

13. Fahrzeug nach irgendeinem der Ansprüche 1 bis 12, dadurch gekennzeichnet, daß das Gewicht (60) einen Stützrahmen (61) aufweist, der lösbar Gewichte (93) trägt, ein Halteglied (76), das an dem Rahmen anbringbar ist, um ein Freikommen der Gewichte zu verhindern, sowie ein Anhängeglied (79), das an dem Halteglied befestigt ist.

14. Fahrzeug nach irgendeinem der Ansprüche 1 bis 13, gekennzeichnet ferner durch eine Steuerventilanordnung (38, 42) für den oder die Hubzylinder, welche eine erste Stellung zum Heben des Gewichtes, eine zweite Stellung zum Absenken des Gewichtes und eine dritte Stellung aufweist, in der der oder die Zylinder als ein hydraulisches Dämpfungssystem verbunden sind.

15. Fahrzeug nach Anspruch 14, dadurch gekennzeichnet, daß die Ventilanordnung (38, 42) den oder die Zylinder (15, 16) in der dritten Stellung durch eine Drosselvorrichtung (40) mit einem Druckakkumulator (36) verbindet.

16. Fahrzeug nach Anspruch 15, dadurch gekennzeichnet, daß die Drosselvorrichtung (40) einjustierbar ist.

17. Fahrzeug nach Anspruch 15 oder 16, dadurch gekennzeichnet, daß der oder die Zylinder (15, 16) doppelwirkend und mit "Heb-" und "Senk-"Leitungen (45, 46) der Ventilanordnung in der dritten Stellung verbunden sind, wobei die "Heb-"Leitung (45) mit der Drosselvorrichtung (40) und dem Akkumulator (36) und die "Senk-"Leitung (46) mit dem Sumpf (44) verbunden wird.

18. Fahrzeug nach Anspruch 17, dadurch gekennzeichnet, daß die Ventilanordnung (38, 42) eine vierte Stellung aufweist, in der die "Heb-" und "Senk-"Leitungen (45, 46) beide isoliert sind, um das Gewicht (60) oder das Gerät hydraulisch zu verriegeln.

**Revendications**

1. Véhicule, en particulier un tracteur, équipé d'une masse de lestage amovible (60) et d'au moins un vérin de levage (15, 16) pour relever et abaisser la masse sensiblement verticalement, caractérisé en ce que le vérin ou chaque vérin de levage (15, 16) est fixé à une extrémité (14) tandis que l'autre extrémité (19, 20) est reliée de façon séparable à la masse (60), par des moyens de guidage (12, 13) pour guider la masse sensiblement verticalement, et par des moyens de verrouillage (81—87) qui peuvent agir entre la masse (60) et les moyens de guidage (12, 13) dans au moins une position verticale de la masse pour fixer la masse en position et permettre la séparation du ou des vérins (15, 16) pour la manoeuvre d'un outil ou accessoire au moyen de ceux-ci.

2. Véhicule suivant la revendication 1, caractérisé en ce que les moyens de guidage comprennent deux guidages verticaux (12, 13), un de chaque côté de la masse (60), et en ce que le vérin ou chaque vérin (15, 16) est vertical, la masse étant suspendue à partir du ou des vérins.

3. Véhicule suivant la revendication 1 ou 2, caractérisé en ce que la masse (60), les moyens de guidage (12, 13) et le ou les vérins de levage (15, 16) sont placés à l'intérieur du capot du véhicule.

4. Véhicule suivant la revendication 1, caractérisé en ce que les moyens de guidage comprennent deux montants (12, 13) entre lesquels la masse (60) est guidée, et en ce que les moyens de verrouillage comprennent des broches (86, 87) pour goupiller la masse sur les montants.

5. Véhicule suivant la revendication 4, caractérisé en ce que chaque montant comporte une pluralité de trous verticalement espacés (84, 85) pour goupiller la masse (60) à différentes hauteurs.

6. Véhicule suivant la revendication 4 ou 5, caractérisé en ce qu'il est prévu deux vérins de levage (15, 16) fixés chacun par une extrémité au montant correspondant et reliés de façon libérable à la masse (60) par leur autre extrémité.

7. Véhicule suivant la revendication 6, caractérisé en ce que chaque vérin (15, 16) comporte une extrémité supérieure fermée (14) fixée à son montant (12, 13) et une extrémité inférieure formant tige (19, 20) reliée de façon pivotante à la masse (60).

8. Véhicule suivant la revendication 7, caractérisé en ce que l'extrémité supérieure fermée (14) peut être fixée a son montant à une pluralité de positions de hauteur différente.

9. Véhicule suivant les revendications 6, 7 et 8, caractérisé en ce que les montants (12, 13) sont des profilés à section en U dans lesquels les vérins sont disposés.

10. Véhicule suivant l'une quelconque des revendications 1 à 9, caractérisé par des moyens (25) pour supporter de façon pivotante des barres inférieures (22) et par des moyens (24) pour relier les barres inférieures (22), au lieu de la masse, au vérin ou aux vérins (15, 16).

11. Véhicule suivant les revendications 4 et 10, caractérisé en ce que les moyens supports comprennent des consoles (25) fixées aux parties inférieures des montants (12, 13).

12. Véhicule suivant la revendication 10 ou 11, caractérisé en ce que la masse (60) comprend un cadre (61) comportant un élément (28, 29) qui procure un point de pivotement pour une barre de liaison supérieure.

13. Véhicule suivant l'une quelconque des revendications 1 à 12, caractérisé en ce que la masse (60) comprend un cadre support (61) portant des masses amovibles (93), un élément de retenue (76) qui peut être fixé au cadre pour empêcher les masses de s'échapper, et un organe d'attelage (79) fixé à l'élément de retenue.

14. Véhicule suivant l'une quelconque des revendications 1 à 13, caractérisé en outre par un système de vannes de commande (38, 42) pour le ou les vérins de levage, présentant une première position pour relever la masse, une deuxième position pour abiasser la masse, et une troisième position dans laquelle le ou les vérins sont connectés de manière à constituer un système d'amortissement hydraulique.

15. Véhicule suivant la revendication 14, caractérisé en ce que le système de vannes (38, 42) relie le ou les vérins (15, 16), dans la troisième position, à un accumulateur de pression (36) par l'intermédiaire d'un dispositif d'étranglement (40).

16. Véhicule suivant la revendication 15, caractérisé en ce que le dispositif d'étranglement (40) est réglable.

17. Véhicule suivant la revendication 15 ou 16, caractérisé en ce que le ou les vérins (15, 16) sont à double effet et sont reliés à des conduits de "relevage" et "d'abaissement" (45, 46), le système de vannes (38, 42), dans la troisième position, reliant le conduit de "relevage" (45) au dispositif d'étranglement (40) et à l'accumulateur (36) et reliant le conduit d'"d'abaissement" (46) au bac (44).

18. Véhicule suivant la revendication 17, caractérisé en ce que le système de vannes (38, 42) comporte une quatrième position dans laquelle les conduits de "relevage" et "d'abaissement" (45, 46) sont tous deux isolés de façon à verrouiller hydrauliquement la masse (60) ou l'outil ou accessoire.

FIG.1

FIG.2

FIG.3

FIG.4

FIG.5

FIG.6